# EUROPÄISCHE PATENTSCHRIFT

(11) **EP 0 480 139 B1**
(45) Veröffentlichungstag und Bekanntmachung des Hinweises auf die Patenterteilung: **08.05.1996**
(21) Anmeldenummer: 91113189.4
(22) Anmeldetag: 06.08.1991
(51) Int. Cl.: C08G 18/10

(54) **Verfahren zur Herstellung von Polyetherurethanharnstoffaminen sowie deren Verwendung**
Process for the preparation of polyether urethane-urea amines and their use
Procédé pour la préparation d'amines de polyether-uréthaneurée et leur utilisation

(30) Priorität: 08.10.1990 DE 4031811
(43) Veröffentlichungstag der Anmeldung: 15.04.1992
(73) Patentinhaber: HÜLS AKTIENGESELLSCHAFT, D-45764 Marl (DE)
(72) Erfinder: Wolf, Elmar, Dr., W-4350 Recklinghausen (DE)

(56) Entgegenhaltungen:
- EP-A- 0 084 106
- EP-A- 0 293 110
- EP-A- 0 457 089
- DE-A- 1 122 254
- FR-A- 2 196 365

## Beschreibung

Vorliegende Erfindung betrifft ein Verfahren zur Herstellung von Polyetherurethanharnstoffaminen (Poly-EUHA) sowie die Verwendung der erfindungsgemäß hergestellten Verfahrensprodukte.

Polyetherurethanharnstoffamine in Kombination mit Epoxidharzen (auf Bisphenol A-Basis) eignen sich zur Herstellung härtbarer Mischungen, Klebstoffe, Dichtungsmassen und Formteile auf allen Anwendungsgebieten, wo gute Haftung, Chemikalienbeständigkeit, Flexibilität und Elastizität gefordert werden.

Mit Poly-EUHA gehärtete Epoxidharze sind seit langem bekannt. Gemäß der DE-OS 23 38 256 werden hochmolekulare aminterminierte Poly-EUHA durch Reaktion von freie NCO-Gruppen enthaltenden Isocyanat-Präpolymeren mit Aminen in stark verdünnten Lösungen hergestellt und anschließend mit Epoxidharzen ausgehärtet. Die Verwendung eines Lösungsmittels ist bei dieser Herstellung von Poly-EUHA zwingend notwendig. Nach dem Entfernen des Lösungsmittels weisen jedoch die gemäß der DE-OS 23 38 256 hergestellten Produkte eine für die Praxis zu hohe Viskosität auf.

In der DE-AS 24 18 041 wird ein Verfahren zur Herstellung von elastifizierten Formteilen beschrieben, gemäß welchem bestimmte Epoxidharze mit Aminverbindungen umgesetzt werden, die durch Hydrolyse bestimmter präpolymerer Ketimine erhalten werden.

Abgesehen davon, daß die in der DE-AS 24 18 041 eingesetzten Poly-EUHA nach einem aufwendigen Verfahren - Umsetzung des NCO-Präpolymeren mit einem Diamin, das neben einer primären Aminogruppe eine Ketimingruppe enthält (H₂N-R-N=CR'₂), die dann nach der NH₂/NCO-Reaktion hydrolysiert werden muß - hergestellt werden müssen, ist außerdem noch eine weitere Verbesserung der Elastizität der gehärteten Produkte wünschenswert. Ein großer Fortschritt bei der Herstellung von Poly-EUHA wird durch die Lehre der DE-OS 31 51 592 (EP-A 0 084 106) aufgezeigt. Hier wird das NCO-Präpolymere vor der Reaktion mit dem im Überschuß vorliegenden Polyamin mit Nonylphenol blockiert, wobei unerwünschte Reaktionen zwischen Amin- und Isocyanatkomponente ausgeschaltet sind. Die so hergestellten Poly-EUHA sind aber intensiv gelb gefärbt, bedingt durch die lange Reaktionsdauer (3,5-5 h bei 70 - 80 °C) des Nonylphenol-blockierten NCO-Präpolymeren und des Polyamins. Außerdem wäre eine weitere Reduzierung der Viskosität, über die in der DE-OS 31 51 592 keine Angaben gemacht wird, wünschenswert. Dies wird indirekt in der DE-OS 31 51 592 ersichtlich, da alle Anwendungsbeispiele einen reaktiven Verdünner enthalten.

EP-A-O 457 089 und EP-A-O 293 110 beschreiben Verfahren zur Herstellung von Polyetherurethanharnstoffaminen durch Umsetzung eines blockierten Isocyanatpräpolymers mit einem Überschuß an Polyamin. Hierbei erfolgt ihre Herstellung in Substanz, wobei die enorme Reaktivität der NCO-Gruppe gegenüber der NH₂-Gruppe durch Blockierung stark reduziert wird.

Aufgabe der vorliegenden Erfindung ist es daher, ein Verfahren aufzuzeigen, mit dem es möglich ist, Polyetherurethanharnstoffamine herzustellen, die die vorteilhaften Eigenschaften der Poly-EUHA der DE-OS 31 51 592 besitzen, ohne mit deren Nachteilen behaftet zu sein.

Es wurde überraschend gefunden, daß Polyetherurethanharnstoffamine mit den vorteilhaften Eigenschaften der gemäß der Lehre der DE-OS 31 51 592 hergestellten Poly-EUHA, aber ohne deren Nachteile, erhalten werden, wenn die Umsetzung von Amin und Isocyanatpräpolymeren bei 140-170 °C, insbesondere bei 150-160 °C, durchgeführt wird.

Gegenstand der Erfindung ist daher ein Verfahren zur Herstellung von Polyetherurethanharnstoffaminen, dadurch gekennzeichnet, daß das Isocyanatpräpolymere mit dem Polyamin 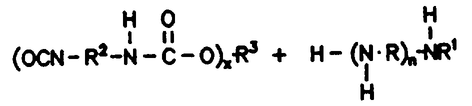 im NCO:NH-Äquivalenzverhältnis 1:2-12 bei Temperaturen von 140 bis 170 °C, bevorzugt 150 bis 160 °C, zur Reaktion gebracht wird, wobei
- R: einen gegebenenfalls alkylsubstituierten C₂-C₁₂-Alkylen- oder C₄-C₁₄-Cycloalkylenrest oder Rest des Isophorondiamins,
- R¹: gleich H, -CH₂-CH₂-CN, Cycloalkyl, 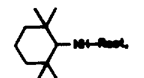
- n: gleich 1 - 5,
- x: gleich 2 oder 3,
- R: gleich R oder Rest des Isophorondiisocyanats,
- R³: gleich Reste von linearen oder verzweigten Polyalkylenpolyetherpolyolen mit mittleren Molgewichten von 250 bis 6 000, erhalten durch Copolymerisation, Blockcopolymerisation oder anionische Polymerisation von Alkylenoxiden mit difunktionellen Alkoholen oder polyfunktionellen Alkoholen, ausgewählt aus der Gruppe bestehend aus 1,1,1-Trimethylolpropan, Trimethyloläthan und Glycerin, oder Aminen, ausgewählt aus der Gruppe Ethylendiamin oder Hexamethylendiamin als Starterkomponente, oder durch kationische Polymerisation und Copolymerisation cyclischer Ether, ausgewählt aus der Gruppe bestehend aus Tetrahydrofuran, Ethylenoxid und Propylenoxid, mit sauren Katalysatoren,
bedeutet.

Bei der Umsetzung geht man so vor, daß zu dem Amin das NCO-Präpolymere unter intensiver Rührung innerhalb weniger Minuten zudosiert wird. Für das erfindungsgmäße Verfahren ist es zwingend notwendig, daß die Umsetzung der Komponenten bei oder insbesondere oberhalb 140 °C, bevorzugt bei 150-160 °C, erfolgt. Wird die Umsetzung unterhalb 140 °C durchgeführt, erhält man Amine, die im Gemisch mit Epoxidharzen zu trüben, milchigen Produkten aushärten; die nach dem erfindungsgemäßen Verfahren hergestellten Amine härten dagegen mit dem EP-Harz zu klaren, transparenten Formkörpern aus.

Die für das erfindungsgemäße Verfahren einsetzbaren NCO-Präpolymeren werden in der Regel so hergestellt, daß das Diisocyanat mit dem Polyetherglykol im NCO:OH-Verhältnis 2:1 bei 80-100 °C so lange zur Reaktion gebracht wird, bis der gewünschte NCO-Gehalt erreicht ist. In manchen Fällen hat es sich als vorteilhaft erwiesen, das NCO-Präpolymere in zwei Stufen herzustellen, wobei in einem 1. Reaktionsschritt das Diisocyanat im großen molären Überschuß mit dem Polyetherglykol bei 80-100 °C umgesetzt wird, und in einem 2. Reaktionsschritt das nicht umgesetzte Diisocyanat durch eine Dünnschichtdestillation vom Reaktionsprodukt entfernt wird. Ein solches NCO-Präpolymer wird vor allem dann für das erfindungsgemäße Verfahren eingesetzt, wenn besonders niedrigviskose Reaktionsprodukte erhalten werden sollen.

Als (cyclo)aliphatische Diisocyanate seien z. B. genannt:
Isophorondiisocyanat (IPDI), 2.4.4(2.2.4)-Trimethyl-1,6-diisocyanatohexan (TMDI), 2-Methyl-1,5-diisocyanatopentan, Hexamethylendiisocyanat, m,p-Xylylendiisocyanat, Methylen-bis(4-cyclohexylisocyanat), trans-1,4-Diisocyanatocyclohexan;

Als lineare oder verzweigte Polyetherglykolkomponente mit mittleren Molgewichten von 250-6 000 kommen infrage die Polyalkylenpolyetherpolyole, die durch Copolymerisation, Blockcopolymerisation oder anionische Polymerisation von Alkylenoxiden, wie insbesondere Ethylenoxid, Propylenoxid mit difunktionellen Alkoholen, wie Propandiol-1,3, Butandiol-(1,4) oder polyfunktionellen Alkoholen ausgewählt aus der gruppe bestehend aus Trimethylolethanol, 1,1,1-Trimethylolpropan, Glycerin oder Aminen ausgewählt aus der gruppe bestehend aus Ethylendiamin oder Hexamethylendiamin als Starterkomponenten oder durch kationische Polymerisation und Copolymerisation cyclischer Ether wie Tetrahydrofuran, Ethylenoxid und Propylenoxid mit sauren Katalysatoren erhalten werden.

Als Beispiele für die erfindungsgemäß verwendbaren Polyamine seien genannt: Ethylendiamin, Diethylentriamin, Triethylentetramin, Tetraethylenpentamin, 1,2-Diaminopropan, 2-Methyl-pentamethylendiamin, Dodecamethylendiamin, 2,2,4(2,4,4)-Trlmethylhexamethylendiamin, 1-Cyclohexylamino-3-aminopropan, 3,3'-Dimethyl-4,4'-diamino-dicyclohexylmethan und insbesondere Isophorondiamin.

Über die zur Flexibilisierung der Polyamine notwendige Menge an NCO-Polyetherglykolpräpolymeren können keine allgemein gültigen Angaben gemacht werden, da für jedes Polyamin zur Flexibilisierung eine andere Menge an Isocyanat-Präpolymeren notwendig ist. Die flexibilisierende Eigenschaft des Isocyanat-Präpolymeren hängt neben dem eingesetzten Diisocyanat im starken Maße vom Polyetherglykol ab. Sie ist für ein Polyamin um so größer, je höher das Molgewicht des Polyetherglykols ist und je höher die Konzentration des Polyetherglykols im Reaktionsprodukt ist. Polyethylen- bzw. Propylenetherglykole eignen sich zur Flexibilisierung wesentlich besser als die entsprechenden (gleiches Molgewicht) Polytetrahydrofuranglykole. Ein wesentliches Merkmal der nach dem erfindungsgemäßen Verfahren hergestellten Polyamine besteht darin, daß sie im Gegensatz zu den gemäß der Lehre der DE-OS 31 51 592 hergestellten nahezu farblos sind.

Weiterhin betrifft die vorliegende Erfindung die Verwendung der erfindungsgemäßen Verfahrensprodukte zur Herstellung von 2K-EP-Reaktionslacken und Beschichtungen in Kombination mit Pentamethyldiethylentriamin als Katalysator. Die mit den erfindungsgemäßen Verfahrensprodukten mitverwendeten EP-Harze enthalten im Durchschnitt mehr als eine Epoxidgruppe im Molekül und können Glycidylether von mehrwertigen Alkoholen, wie z. B. Glycerin, hydriertes Diphenylolpropan oder von mehrwertigen Phenolen, wie z. B. Resorcin, Diphenylol-propan oder Phenol-Aldehydkondensaten sein. Es können auch Glycidylester mehrwertiger Carbonsäuren, wie z. B. 2,2,4(2,4,4)-Trimethyladipinsäure, Hexahydrophthalsäure oder dimerisierte Fettsäuren verwendet werden. Die Epoxidwerte der genannten Verbindungen liegen etwa zwischen 0,1 und 0,7. Besonders bevorzugt ist der Einsatz von flüssigen EP-Harzen auf Bisphenol-A-Basis wie auch Bisphenol-F-Basis mit einem Molgewicht von 350-450.

Zur Formulierung einer Reaktionsmasse für Lacke und Beschichtungen kommen die üblichen Füllstoffe auf mineralischer und organischer Basis, Pigmente, Weichmacher, Beschleuniger und sonstige Zusatzmittel in Betracht. Die erfindungsgemäß erhaltenen Lacke sind nach einem Tag klebfrei und hinsichtlich Härte und Flexibilität in einem weiten Bereich beliebig einstellbar. Das gleiche gilt natürlich auch für die Verwendung der erfindungsgemäßen Reaktionsmassen als Beschichtungen. Werden besonders hohe Dehnungen (DIN 53 455) angestrebt, hat es sich als vorteilhaft erwiesen, den erfindungsgmäßen Polyaminen Monoamine, wie z. B. 2-Ethylhexylamin, Laurylamin, Hexoxypropylamin oder Diamine mit nur 2 aktiven H-Atomen, wie sie z. B. durch Reaktion von Diaminen, wie z. B. Ethylendiamin, Hexamethylendiamin, Dodecamethylendiamin, mit Acrylnitril, Acrylsäure-t-butylester oder Monoglycidylethern, wie z. B. Butylglycidylether, 2-Ethylhexylglycidylether, im Molverhältnis 1:2 erhalten werden, zuzusetzen, wobei die mittlere N-H-Funktionalität dieses Härter-Gemisches zwischen 3,8 und 2,4, bevorzugt bei ca. 3, liegt.

Die erfindungsgemäßen Beschichtungen zeichnen sich durch eine gute Chemikalienbeständigkeit aus; hervorzuheben ist ihre gute Weiterreißfestigkeit nach zweistündigem Erhitzen auf 150 °C, eine Eigenschaft, die nur sehr wenige bei Raumtemperatur gehärtete EP-Beschichtungen besitzen.

### I. Herstellung der Polyetherurethanharnstoffpolyamine

### A. Herstellung des Polyetherurethanpolyisocyanats

### Beispiel 1

a) 2 000 Gew.-T. eines linearen Polypropylenglykols der OH-Zahl 56,1 wurden mit 444 Gew.-T. Isophorondiisocyanat (IPDI) und 1,2 Gew.-T. Dibutylzinndilaurat (DBTL) versetzt. Dieses Gemisch wurde so lange auf 80 °C erhitzt, bis der NCO-Gehalt auf 3,3 % gefallen war. Der Monomergehalt betrug 2,1 %.
b) 2 000 Gew.-T. des im Beispiel 1 a) verwendeten Polypropylenglykols wurden mit 2 220 Gew.-T. IPDI und 2,2 Gew.-T. DBTL so lange und 80 °C erhitzt (ca. 2 h), bis der NCO-Gehalt 18 % erreicht hatte. Das nicht umgesetzte IPDI wurde anschließend bei 180 °C und 0,1 Torr im Dünnschichtverdampfer vom Reaktionsprodukt abgetrennt. Das Reaktionsprodukt hatte einen NCO-Gehalt von 3,1 % und einen Monomerengehalt von 0,1 %.

### Beispiel 2

3 000 Gew.-T. eines verzeigten (trifunktionellen) Polypropylenglykols der OH-Zahl 56,1 wurden mit 666 Gew.-T. IPDI und 1,8 Gew.-T. DBTL in Analogie zum Beispiel 1 a) erhitzt. Der NCO-Gehalt des Reaktionsproduktes betrug 3,4 %, der Monomer-Gehalt 2,3 %.

### Bespiel 3

2 000 Gew.-T. eines linearen Polypropylenglykols der OH-Zahl 28 wurden mit 222 Gew.-T. IPDI und 1,1 Gew.-T. DBTL in Analogie zum Beispiel 1 a) umgesetzt. Der NCO-Gehalt des Reaktionsproduktes betrug 1,9 %, der Monomergehalt 1,7 %.

### Beispiel 4

650 Gew.-T. Polytetrahydrofuran mit einem Molgewicht von ca. 650 und 444 Gew.-T. IPDI sowie 0,55 Gew.-T. DBTL wurden in Analogie zur Beispiel 1 a) erhitzt. Das Reaktionsprodukt hatte einen NCO-Gehalt von 7,6 Gew.-% und einen Monomerengehalt von 4,9 %.

### B. Herstellung der erfindungsgemäßen Polyetherurethanharnstoffpolyamine

### Allgemeine Herstellungsvorschrift

In einen Reaktionsgefäß wird das Diamin gegebenenfalls mit Nonylphenol vorgelegt und auf ca. 150 °C erwärmt. Unter intensiver Rührung (300-500 U/min) wird das IPDI-Präpolymere (Beispiel I. A. 1-4) zudosiert. Die Innentemperatur des Reaktors darf 145 °C nicht unterschreiten.

Bei der Zugabe des Präpolymers ist streng zu beachten, daß das Präpolymer nicht direkt der Amin-Atmosphäre ausgesetzt wird. Durch einen Aufsatz kann über ein Innenrohr das Präpolymer und über ein etwa 10 cm langes Außenrohr N₂ in den Reaktionsbehälter geleitet werden. Ohne diese N₂-Abdeckung kann das IPDI-Präpolymer nicht zudosiert werden.

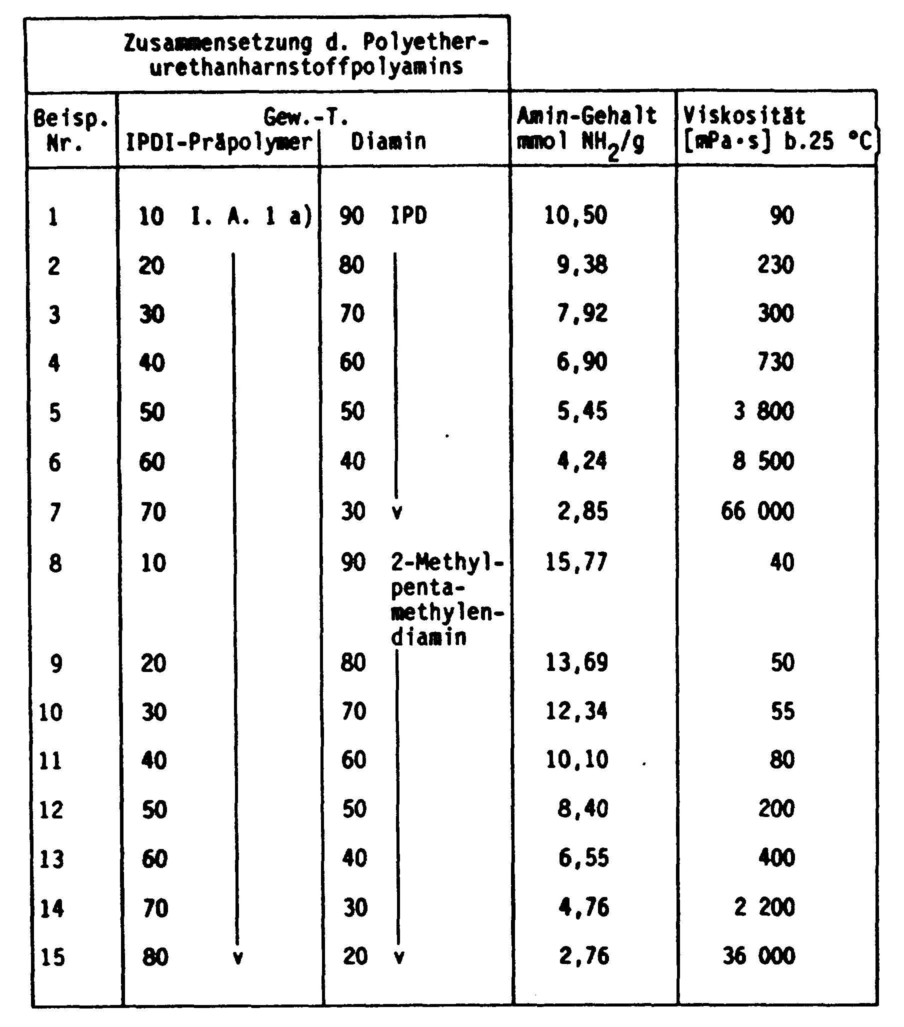

### Beispiel 16

### Vergleich: erfindungsgemäße Verfahren - nicht erfindungsgemäße Verfahren

| Beisp. Nr. | Zusammensetzung des Polyetherurethanharnstoffpolyamins Gew.-T. | | | NH₂-Gehalt | Viskosität bei 25 °C |
|---|---|---|---|---|---|
| | IPDI-Präpolymer | Diamin | Reaktions-temp. °C | mmol/g | mPa˙s |
| a) | 70 I.A. 1a | 30 IPD | 150 | 2,81 | 66 000 |
| b)* | 70 I.A. 1a | 30 IPD | 120 | 2,85 | 160 000 |
| c) | 70 I.A. 1b | 30 IPD | 150 | 2,84 | 24 000 |
| d)* | 70 I.A. 1b | 30 IPD | 120 | 2,79 | 78 000 |
| e) | 65 I.A. 1a | 35 IPD | 150 | 3,54 | 35 000 |
| f)* | 65 I.A. 1a | 35 IPD | 120 | 3,55 | 95 000 |
| g) | 65 I.A. 1b | 35 IPD | 150 | 3,62 | 14 500 |
| h)* | 65 I.A. 1b | 35 IPD | 120 | 3,66 | 40 000 |

| | | | | | |
|---|---|---|---|---|---|
| * = nicht erfindungsgemäße Beispiele | | | | | |

### Beispiel 17

750 Gew.-T. des IPDI-Präpolymeren I.A. 1a wurden mit 250 Gew.-T. TMD entsprechend der allgemeinen Vorschrift umgesetzt. Das Reaktionsprodukt hatte einen Amingehalt von 2,63 mmol/g; die Viskosität bei 25 °C betrug 39 000 mPa·s.

### Beispiel 18

826 Gew.-T. des IPDI-Präpolymeren I.A. 1a wurden mit 174 Gew.-T. Hexamethylendiamin entsprechend Beispiel 17 umgesetzt. Das Reaktionsprodukt hatte einen Amingehalt von 2,41 mmol/g; die Viskosität bei 25 °C betrug 42 000 mPa·s.

### Beispiel 19

700 Gew.-T. des IPDI-Präpolymeren I.A. 3 wurden mit 300 Gew.-T. IPD entsprechend Beispiel 7 umgesetzt. Das Reaktionsprodukt hatte einen Amingehalt von 3,21 mmol/g; die Viskosität bei 25 °C betrug 6 200 mPa·s.

### II. Herstellung von Reaktionslacken und Beschichtungen

### Beispiel 1 (Nicht erfindungsgemäß)

65,25 Gew.-T. Polyamin Beispiel 17, 8 Gew.-T. 2-Ethylhexoxypropylamin, 21 Gew.-T. Nonylphenol, 8 Gew.-T. Benzylalkohol, 3 Gew.-T. DMP 30 wurden mit
a) 80,2 Gew.-T. eines EP-Harzes auf Bisphenol A-Basis mit einem EP-Wert von 0,53 (EP I)
b) 80,2 Gew.-T. eines EP-Harzes auf Basis eines aliphatischen Diglycidylethers (EP II) mit einem EP-Wert von 0,52 intensiv gemischt und nach einer Reifezeit von ca. 10-15 min
A) auf gut entfettete Stahlbleche aufgetragen,
B) zu 4 mm dicken Platten gegossen.
Nach 7 Tagen Härtung bei Raumtemperatur wurden die lacktechnischen sowie physikalischen Eigenschaften gemessen. Diese Ergebnisse sowie die der nachfolgenden Beispiele werden in der weiter unten folgenden Tabelle zusammengefaßt.

### Beispiel 2

60,9 Gew.-T. Polyasin Beispiel 15, 8 Gew.-T. 2-Ethylhexoxypropylamin, 21 Gew.-T. Nonylphenol, 8 Gew.-T. Benzylalkohol, 3 Gew.-T. Pentamethyldiethylentriamin wurden mit 80,2 Gew.-T. EP I entsprechend Beispiel 1 verarbeitet.

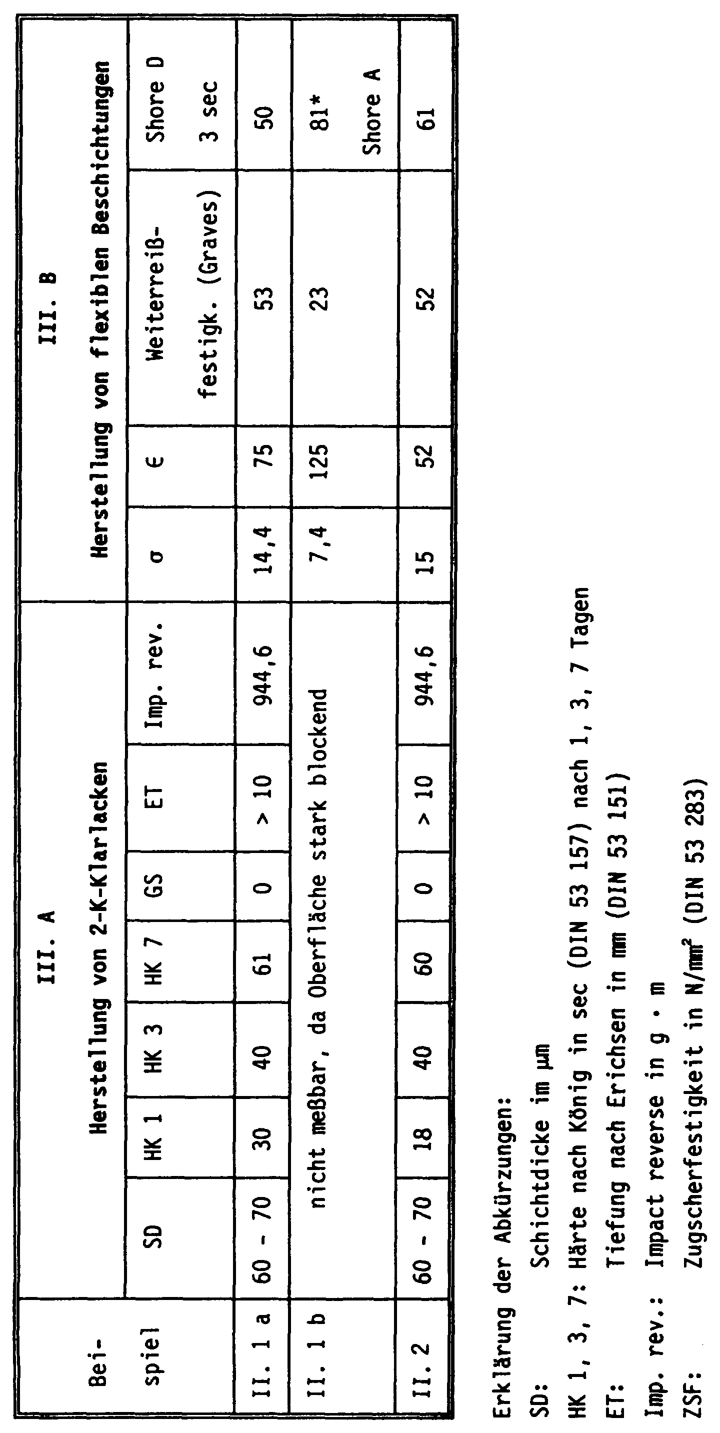

## Patentansprüche

1. Verfahren zur Herstellung von Polyetherurethanharnstoffaminen, dadurch gekennzeichnet,
daß das Isocyanatpräpolymere mit dem Polyamin 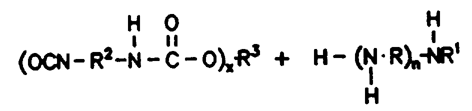 im NCO:NH-Äquivalenzverhältnis 1:2-12 bei Temperaturen von 140 bis 170 °C, bevorzugt 150 bis 160 °C, zur Reaktion gebracht wird, wobei
R einen gegebenenfalls alkylsubstituierten C₂-C₁₂-Alkylen- oder C₄-C₁₄-Cycloalkylenrest oder Rest des Isophorondiamins,
R¹ gleich H, -CH₂-CH₂-CN, Cycloalkyl, 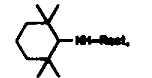
n gleich 1 - 5,
x gleich 2 oder 3,
R gleich R oder Rest des Isophorondiisocyanats,
R³ gleich Reste von linearen oder verzweigten Polyalkylenpolyetherpolyolen mit mittleren Molgewichten von 250 bis 6 000, erhalten durch Copolymerisation, Blockcopolymerisation oder anionische Polymerisation von Alkylenoxiden mit difunktionellen Alkoholen oder polyfunktionellen Alkoholen, ausgewählt aus der Gruppe bestehend aus 1,1,1-Trimethylolpropan, Trimethyloläthan und Glycerin, oder Aminen, ausgewählt aus der Gruppe Ethylendiamin oder Hexamethylendiamin als Starterkomponente, oder durch kationische Polymerisation und Copolymerisation cyclischer Ether, ausgewählt aus der Gruppe bestehend aus Tetrahydrofuran, Ethylenoxid und Propylenoxid, mit sauren Katalysatoren,
bedeutet.

2. Verwendung der Verfahrensprodukte nach Anspruch 1 für 2 K-Reaktionslacke und Beschichtungen in Kombination mit Pentamethyldiethylentriamin als Katalysator.

## Claims

1. Process for preparing polyether urethane urea amines, characterized in that the isocyanate pre-polymer is reacted with the polyamine 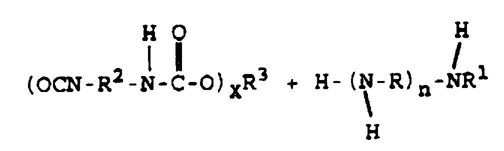 in the NCO:NH equivalent ratio of 1:2-12 at temperatures from 140 to 170°C, preferably 150 to 160°C, where
R is an optionally alkyl-substituted C₂-C₁₂-alkylene radical or C₄-C₁₄-cycloalkylene radical or isophoronediamine radical,
R¹ is equal to H, -CH₂-CH₂-CN, cycloalkyl, 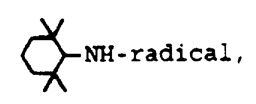
n is equal to 1 - 5,
x is equal to 2 or 3,
R is equal to R or an isophorone diisocyanate radical,
R³ is equal to radicals of linear or branched polyalkylene polyether polyols having mean molecular weights of 250 to 6000 obtained by copolymerization, block copolymerization or anionic polymerization of alkylene oxides with difunctional alcohols or polyfunctional alcohols selected from the group comprising 1,1,1-trimethylolpropene, trimethylolethane and glycerol, or amines selected from the group comprising ethylenediamine or hexamethylenediamine as starter component, or by cationic polymerization and copolymerization of cyclic ethers selected from the group comprising tetrahydrofuran, ethylene oxide and propylene oxide, with acidic catalysts.

2. Use of the process products according to Claim 1 for two-component catalyzed lacquers and coatings in combination with pentamethyldiethylenetriamine as catalyst.

## Revendications

1. Procédé de préparation des polyétheruréthannuréeamines, caractérisé en ce que :
Le prépolymère d'isocyanate est mis en réaction avec la polyamine 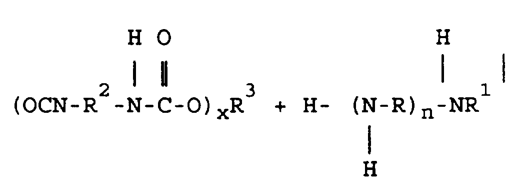 dans le rapport d'équivalence NCO:NH 1:2-12 à des températures de 140 à 170°C, de préférence de 150 à 160°C, dans lequel,
R représente un radical C₂-C₁₂-alkylène ou C₄-C₁₄-cycloalkylène éventuellement substitué par de l'alkyle ou le radical de l'isophorondiamine.
R¹ est égal à H, -CH₂-CH₂-CN, un cycloalkyle 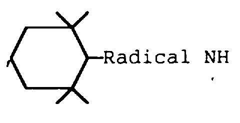
n est égal à 1-5,
x est égal à 2 ou 3,
R est égal à R ou au radical de l'isophorondiisocyanate,
R³ est égal à des radicaux de polyalkylènepolyétherpolyols linéaires ou ramifiés avec des poids moléculaires moyens de 250 à 6000, obtenus par copolymérisation, copolymérisation en bloc ou polymérisation anionique d'oxydes d'alkylène avec des alcools difonctionnels ou des alcools polyfonctionnels, choisis dans le groupe composé du 1,1,1-triméthylolpropane, du triméthyloléthane et du glycérol ou avec des amines, choisies dans le groupe de l'éthylendiamine ou de l'hexaméthylèndiamine comme composant de démarrage ou par polymérisation cationique et copolymérisation d'éthers cycliques, choisis dans le groupe composé du tétrahydrofurane, de l'oxyde d'éthylène et de l'oxyde de propylène, avec des catalyseur acides.

2. Utilisation des produits du procédé selon la revendication 1 pour des vernis réactionnels 2 K et d'enductions en combinaison du pentaméthyldiéthylènetriamine comme catalyseur.
